# EUROPEAN PATENT APPLICATION

(11) **EP 1 645 952 A1**
(43) Date of publication of application: **12.04.2006**
(21) Application number: 03817426.4
(22) Date of filing: 10.07.2003
(51) Int. Cl.: G06F 3/06, G06F 12/00

(54) **METHOD FOR GROUPING A PLURALITY OF LOGIC UNITS, RECEIVED REQUEST PROCESSING METHOD, DEVICE FOR GROUPING A PLURALITY OF LOGIC UNITS, AND RECEIVED REQUEST PROCESSING DEVICE**

(71) Applicant: FUJITSU LIMITED, Kawasaki-shi, Kanagawa 211-8588 (JP)
(72) Inventor: Karube, Fumiyoshi, c/o Fujitsu Ltd., Kawasaki-shi, Kanagawa 211-8588 (JP)
(74) Representative: Körfer, Thomas
(86) International application number: PCT/JP2003/008805
(87) International publication number: WO 2005/006175

(57) **Abstract**

It is an object of the present invention to provide a method of grouping logical units, a method of processing a received request, an apparatus for grouping logical units, and an apparatus for processing a received request, which enable a request to plural LUNs to be processed in a batch. The present invention provides a method of grouping logical units including the steps of selecting a plurality of logical units, each logical unit having a logical unit number, and assigning a group logical unit number, which is distinguished from said logical unit number, to a group including the plural logical units that are selected in the selecting step.

## Description

### BACKGROUND OF THE INVENTION

### 1. Field of the Invention

The present invention relates to a system including plural logical units, and more particularly to a method of grouping logical units, a method of processing a received request, an apparatus for grouping logical units, and an apparatus for processing a received request.

### 2. Description of the Related Art

Large capacity disk apparatuses, such as, RAID (Redundant Array of Inexpensive Disks) apparatuses, have large numbers of physical disk apparatuses stored therein. These large capacity disk apparatuses are included in a logical disk. In addition, these large capacity disk apparatuses are disclosed to a server(s), so that they may be used by the server.

In many cases, the logical disk including the large capacity disk apparatus is configured as a RAID apparatus that includes plural disk apparatuses for the purpose of not only increasing storage capacity but also increasing the data transmission rate and improving reliability of the disk apparatus. The RAID apparatus is categorized as, for example, RAID 0 and RAID 1-5.

The large capacity disk apparatus is disclosed to the server as a logical disk having a LUN (Logical Unit Number). The server recognizes the LUN and accesses the logical disk by using the LUN. Accordingly, the server accesses the physical disk included in the logical disk and organizes a data base or a file system in the LUN.

In an application that operates by using a database, a file system, and a file system that runs on a server, the application in many cases operates by storing data (or files) having logical relations in multiple LUNs due to operational requirements.

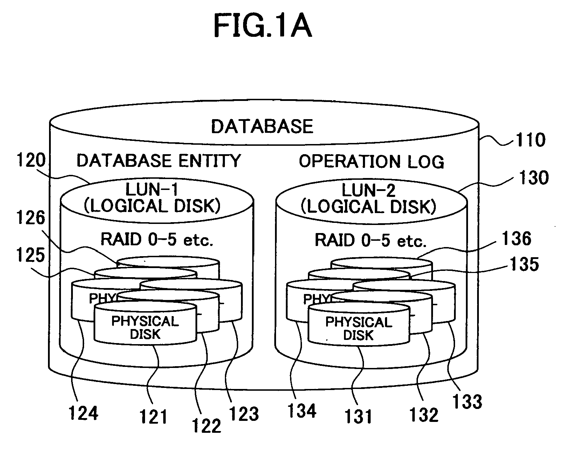

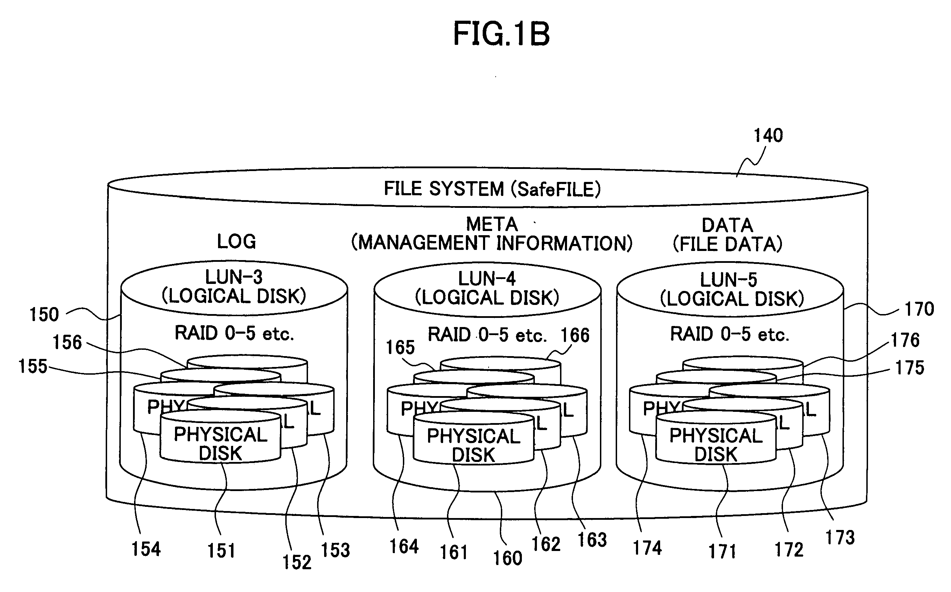

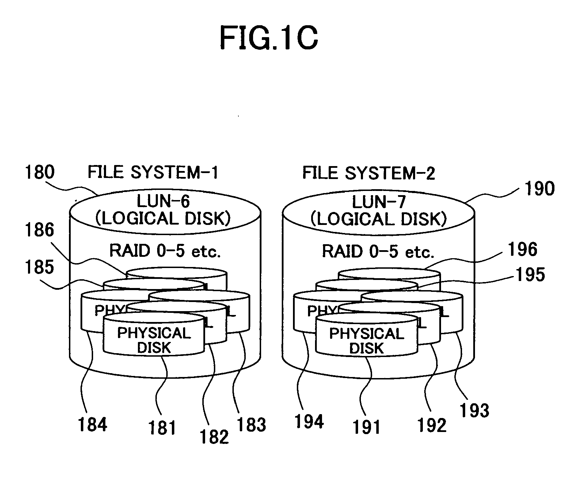

Fig. 1A is a drawing showing an exemplary configuration of a database that is used by an application operating on a server. Fig.1B is a drawing showing an exemplary configuration of a file system (e.g. Safe FILE) that is used by an application operation on a server. Furthermore, Fig. 1C is a drawing showing an example of an application operating on a server in a case where the server uses plural different file systems.

The database 110 (as shown in Fig.1A) includes a logical disk 120 having LUN-1 and a logical disk 130 having LUN-2. The logical disk 120 uses, for example, RAID 0 to RAID 5, to include physical disk apparatuses 121 to 126 therein. The logical disk 130 uses, for example, RAID 0 to RAID 5, to include physical disk apparatuses 131 to 136 therein.

For example, in the database 110, an entity of the database may be stored in the logical disk having LUN-1, and the operations log may be stored in the logical disk having the LUN-2.

Furthermore, a file system (e.g. Safe FILE) 140, which is shown in Fig. 1B, includes a logical disk 150 having LUN-3, a logical disk 160 having LUN-4, and logical disk 170 having LUN-5. The logical disk 150 uses, for example, RAID 0 to RAID 5, to include physical disk apparatuses 151 to 156 therein. The logical disk 160 uses, for example, RAID 0 to RAID 5, to include physical disk apparatuses 161 to 166 therein.

With this configuration, a combination of plural LUNs can be included in a single file system.

Furthermore, Fig. 1C shows two file systems, file system-1 and file system-2. The file system-1 includes a logical disk having LUN-6, and the file system-2 includes a logical disk having LUN-7. The logical disk 180 uses, for example, RAID 0 to RAID 5, to include physical disk apparatuses 181 to 186 therein. The logical disk 190 uses, for example, RAID 0 to RAID 5, to include physical disk apparatuses 191 to 196 therein.

With this configuration, an application stores logically related data in different files on different LUNs, for example, a file in the logical disk 180 having LUN-6 and another file in the logical disk 190 having LUN-7.

However, current RAID apparatuses, which are included in each logical disk of a system comprising plural logical disks having plural LUNs (such as the database 110, the file system 140, the file system-1, and the file system-2 shown in the above-described Figs. 1A-1C), are each configured to be managed only in accordance with its assigned corresponding LUN. Therefore, as described above, even in a case where software which operates on a server performs a request logically in a batch to plural LUNs, the server is required to process such batch of requests separately for each LUN.

As described above, since the RAID apparatus is configured to be managed only in accordance with its assigned corresponding LUN, software which operates on a server using plural LUNs is required to manage data by performing separate requests to each LUN. This results in a problem of being unable to collectively process plural requests which are desired to be processed simultaneously.

In a case of managing, for example, databases with software that operates on a server, it is possible for the software to manage multiple requests to plural LUNs in a batch. However, in performing a process on an actual RAID apparatus, it is necessary to perform the process on each logical disk through the corresponding LUN. Therefore, in reality, even where a process is requested to be performed in a batch, the time for the server to request the process to each LUN is not simultaneous.

For example, the RAID apparatus has a function of performing OPC (One Point Copy) for instantly copying a LUN. However, in a case where this function is desired to be simultaneously performed on plural LUNs, this function has to be requested separately to each LUN. Therefore, the timing for this request is actually deviated. This leads to a result of being unable to simultaneously perform this process.

The patent documents given below disclose related art of the present invention. Patent Document 1 discloses an extended LUN that controls plural logical volumes as a single extended logical unit. Patent Document 2 discloses a method where extended logical units are respectively copied in a RAID apparatus. Furthermore, Patent Document 3 discloses a virtual LUN which is known as a control device LUN (CDLUN). CDLUN provides indirect memory addressing with respect to operational control of a LUN pair inside an array.
(Patent Document 1)
   Japanese Laid-Open Patent Application No.11-327803
(Patent Document 2)
   Japanese Laid-Open Patent Application No.2000-137582
(Patent Document 1)
   Japanese Laid-Open Patent Application No.2002-202914

### SUMMARY OF THE INVENTION

It is a general object of the present invention to provide a method of grouping logical units, a method of processing a received request, an apparatus for grouping logical units, and an apparatus for processing a received request that substantially obviate one or more of the problems caused by the limitations and disadvantages of the related art.

To achieve these and other advantages and in accordance with the purpose of the invention, as embodied and broadly described herein, the present invention provides a method of grouping logical units including the steps of: selecting a plurality of logical units, each logical unit having a logical unit number; and assigning a group logical unit number, which is distinguished from said logical unit number, to a group including the plural logical units that are selected in the selecting step.

Conventionally, plural requests have to be directed to each of the corresponding logical unit numbers (LUN). However, with the present invention, since a single group logical unit number (G-LUN) can be assigned to a group of logical units, multiple processes can be achieved in a batch by a single request with respect to the group logical unit number.

Other objects and further features of the present invention will be apparent from the following detailed description when read in conjunction with the accompanying drawings.

### BRIEF DESCRIPTION OF THE DRAWINGS

Fig.1A is a drawing showing an exemplary configuration of a database used by an application that operates in a server;
Fig.1B is a drawing showing an exemplary configuration of a file system used by an application that operates in a server;
Fig. 1C is a drawing showing an example of a case where an application operating in a server uses plural different file systems;
Fig.2A is a drawing showing an exemplary configuration of a database according to an embodiment of the present invention;
Fig. 2B is a drawing showing an exemplary configuration of a file system according to an embodiment of the present invention;
Fig.2C is a drawing showing an example of a case where an application operating in a server uses plural different file systems according to an embodiment of the present invention;
Fig.3 is a block diagram showing a configuration of a system according to an embodiment of the present invention;
Fig.4 is a drawing showing a management table for managing plural LUNs as a single group logical unit number (G-LUN) according to a first embodiment of the present invention;
Fig.5 is a drawing showing a management table for managing plural LUNs as a single group logical unit number (G-LUN) according to a second embodiment of the present invention;
Fig.6 is a drawing showing a flowchart for forming and maintaining a management table; and
Fig.7 is a drawing showing a flowchart for completing a request requested to a G-LUN by commanding the request to each LUN and detecting the completion of the request from each LUN.

### DESCRIPTION OF THE PREFERRED EMBODIMENTS

Embodiments of the present invention are described below with reference to the drawings.

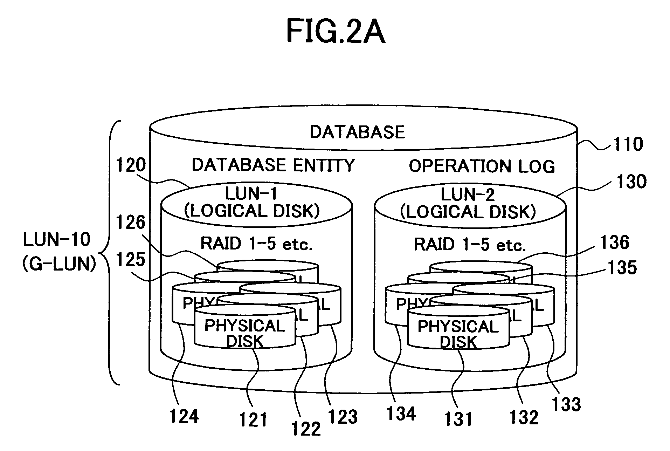

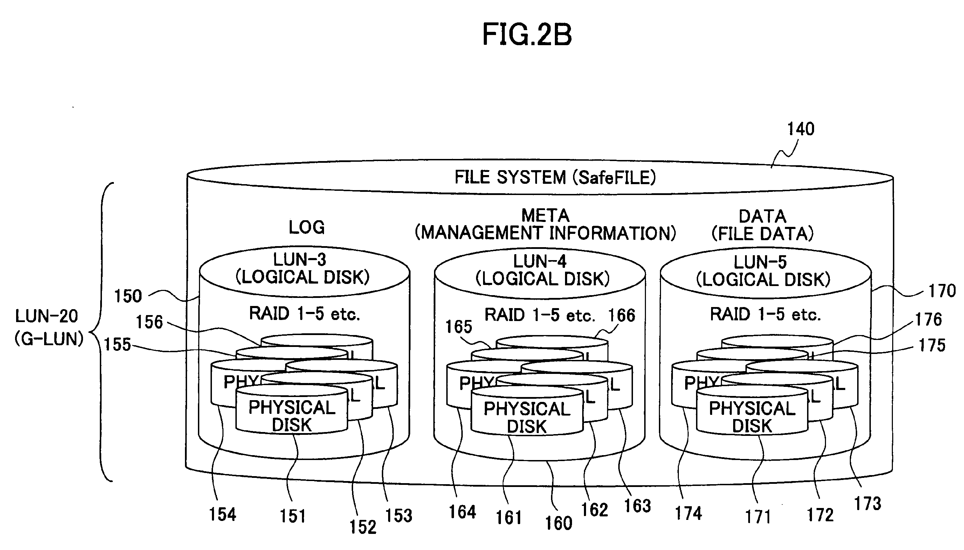

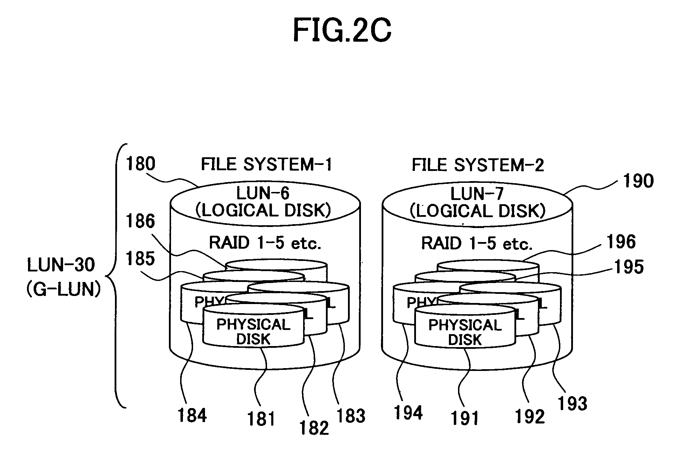

Fig.2A, Fig.2B, and Fig.2C are drawings showing an embodiment of the present invention.

Fig.2A is a drawing showing an embodiment according to the present invention of allocating a group of LUNs with respect to the database 110 shown in Fig.1A. The database 110 shown in Fig.1A includes the logical disk 120 having LUN-1 and the logical disk 130 having LUN-2. In this embodiment, LUN-1 and LUN-2 are assigned to the logical disk 120 and the logical disk 130, respectively. Furthermore, LUN-10, which is another logical unit number (LUN) representing a group of LUNs, is assigned to the entire database 110 including LUN-1 and LUN-2. Unlike a LUN that corresponds to a single logical disk, the LUN-10 has a characteristic of indicating a group of LUNs (G-LUN).

Accordingly, not only is a LUN assigned to each logical disk, but the LUN-10 which represents a group of LUNs is assigned to the entire database 110. Thereby, a server is able to send a request(s) to the database 110 by using the LUN-10 representing a group of LUNs. Therefore, with the present invention, the server (which conventionally has to make requests to each one of the plural LUNs for achieving an operation) only has to make a single request to the LUN-10 representing a group of LUNs, so that the plural requests to the plural LUNs can be completed in a batch.

Fig.2B is a drawing showing an embodiment according to the present invention of allocating a group of LUNs with respect to the file system 140 shown in Fig.1B. The file system 140 shown in Fig.1B includes the logical disk 150 having LUN-3, the logical disk 160 having LUN-4, and the logical disk 170 having LUN-5. In this embodiment, LUN-3, LUN-4, and LUN-5 are assigned to the logical disk 150, 160, and 170, respectively. Furthermore, LUN-20, which is another logical unit number (LUN) representing a group of LUNs, is assigned to the entire file system 140 including LUN-3, LUN-4, and LUN-5. Unlike a LUN that corresponds to a single logical disk, the LUN-20 has a characteristic of indicating a group of LUNs (G-LUN).

Accordingly, not only is a LUN assigned to each logical disk, but the LUN-20 which represents a group of LUNs is assigned to the entire file system 140. Thereby, a server is able to send a request(s) to the file system 140 by using the LUN-10 representing a group of LUNs. Therefore, with the present invention, the server (which conventionally has to make requests to each one of the plural LUNs for achieving an operation) only has to make a single request to the LUN-20 representing a group of LUNs, so that the plural requests to the plural LUNs can be completed in a batch.

Fig.2C is a drawing showing an embodiment according to the present invention of a case where the application operated on a server (as shown in Fig. 1C) uses two different file systems. The file system-1 includes the logical disk 180 having LUN-6. The file system-2 includes the logical disk 190 having LUN-7. In this embodiment, LUN-6 and LUN-7 are assigned to the logical disk 180 in file system-1 and the logical disk 190 in file system-2, respectively. Furthermore, LUN-30, which is another logical unit number (LUN) representing a group of LUNs, is assigned to the entire file systems 1 and 2 including LUN-6 and LUN-7. Unlike a LUN that corresponds to a single logical disk, the LUN-30 has a characteristic of indicating a group of LUNs (G-LUN).

Accordingly, not only is a LUN assigned to each logical disk, but the LUN-30 which represents a group of LUNs is assigned to the entire file systems 1 and 2. Thereby, a server is able to send a request(s) to the file system-1 and the file system-2 by using the LUN-30 representing a group of LUNs. Therefore, with the present invention, the server (which conventionally has to make requests to each one of the plural LUNs for achieving an operation) only has to make a single request to the LUN-30 representing a group of LUNs, so that the plural requests to the plural LUNs can be completed in a batch.

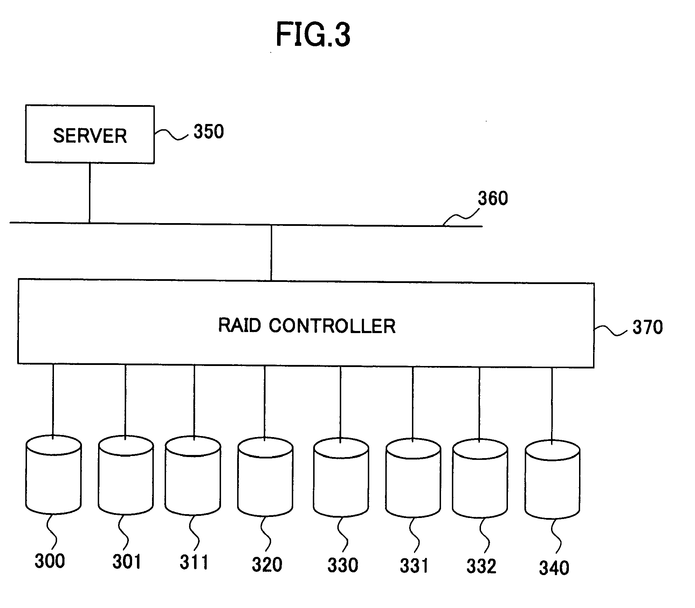

Next, a method of grouping plural logical units by assigning a logical unit number group according to an embodiment of the present invention is described with reference to Fig.3, Fig.4, Fig.5, and Fig.6.

Fig.3 is a block diagram showing a configuration of a system according to an embodiment of the present invention. The system shown in Fig.3 includes a server 350, physical disk apparatuses 300, 301, 311, 320, 330, 331, 332, and 340, a RAID controller 370, and a network 360. The server 350 and the RAID controller 370 are connected to the network 360. Furthermore, the physical disk apparatuses 300, 301, 311, 320, 330, 331, 332, and 340 are connected to the RAID controller 370 and controlled by said RAID controller 370.

The RAID controller 370 is provided with (1) a management table for managing plural LUNs as a single logical unit number group (G-LUN), (2) a process of generating and maintaining the management table, (3) a process of making a request, which is made to the G-LUN, with respect to each of the LUNs, and (4) a process of detecting completion of a process requested to be completed by each LUN and completing the requesting process to the G-LUN.

First, the management table of (1) and the process of generating and maintaining the management table of (2) are described.

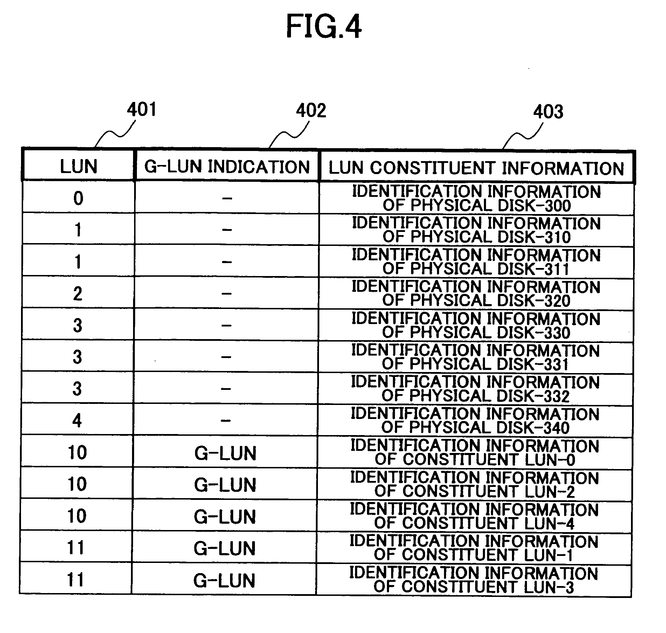

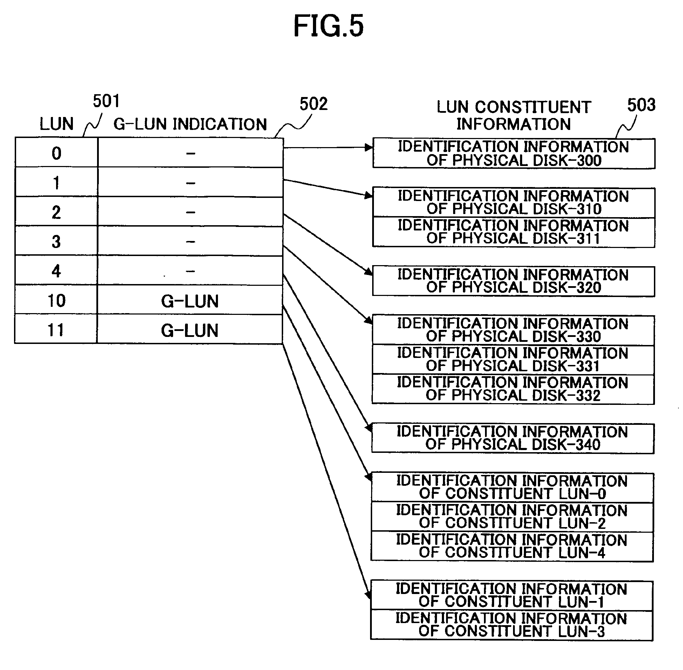

Fig.4 and Fig.5 show embodiments of the management table for managing plural LUNs as a single logical unit group (G-LUN).

The management table in the first embodiment shown in Fig.4 includes a LUN (Logical Unit Number) column 401, a G-LUN display column 402, and a constituent LUN information column 403. The LUN number column 401 indicates the number of each LUN. The G-LUN display column 402 indicates, for example, a flag showing whether a corresponding LUN number is a number representing a logical unit number group (G-LUN). In the embodiment shown in Fig.4, the LUNs corresponding to numbers 10 and 11 represent G-LUN, respectively. In a case where a LUN is not a G-LUN, the LUN constituent information 403 indicates identification information of a corresponding physical disk apparatus.

For example, the first embodiment of the management table in Fig.4 shows that the logical disk corresponding to LUN number 0 is not a logical number group (G-LUN) and that a physical disk 300 is included therein. Furthermore, it is shown that the logical disks corresponding to LUN number 1 are not logical number groups (G-LUN) and that physical disks 310 and 311 are included therein, respectively. Furthermore, it is shown that the logical disk corresponding to LUN number 2 is not a logical disk group (G-LUN) and that a physical disk 320 is included therein. Furthermore, it is shown that the logical disks corresponding to the LUN number 3 are not logical disk groups (G-LUN) and that physical disks 330, 331, and 332 are included therein, respectively. Furthermore, it is shown that the logical disk corresponding to LUN number 4 is not a logical number group (G-LUN) and that a physical disk 340 is included therein.

Meanwhile, the constituent LUN information column 403 shows that the logical disk corresponding to the LUN number 10 represents a logical disk group (G-LUN) and that logical disks corresponding to LUN numbers 0, 2, and 4 are included therein. Accordingly, the constituent LUN information column 403 indicates identification information of a physical disk of a prescribed LUN number that is included in a logical unit number group (G-LUN). Likewise, the constituent LUN information column 403 shows that the logical disk corresponding to the LUN number 11 represents a logical disk group (G-LUN) and that logical disks corresponding to LUN numbers 1 and 3 are included therein.

In a case where the LUN number of an ordinary LUN is 1, 2, 3, and 4 (as shown in the embodiment shown in Fig.4), the LUN number assigned to the G-LUN is a LUN number that is greater than 4 (for example, 10 and 11 in this embodiment). Thus, an available LUN, which is not used as an ordinary LUN, is assigned to the G-LUN. Accordingly, it is unnecessary for a server to employ a new method for recognizing that a logical disk includes a logical number group (G-LUN) therein.

Next, the second embodiment of the management table is described with reference to Fig.5. The management table in the second embodiment shown in Fig.5 includes a LUN (Logical Unit Number) column 501, a G-LUN display column 502, and a constituent LUN information column 503. The LUN number column 501 indicates the number of each LUN. The G-LUN display column 502 indicates, for example, a flag showing whether a corresponding LUN number is a number representing a logical unit number group (G-LUN). In the embodiment shown in Fig.5, the LUNs corresponding to numbers 10 and 11 represent G-LUN, respectively. In a case where a LUN is not a G-LUN, the LUN constituent information indicates identification information of a corresponding physical disk apparatus.

The difference between the management table in the second embodiment shown in Fig.5 and the management table in the first embodiment shown in Fig.4 are different in that: the management table in the first embodiment shown in Fig.4 shows plural LUNs being assigned with the same numbers, and the LUN constituent information column 403 indicating different identification information of physical disks or different identification information of an LUN in a G-LUN with respect to the same LUN number; meanwhile, the management table in the second embodiment shown in Fig.5 shows a single number being assigned to a single LUN, and the LUN constituent information column 503 indicating different identification information of physical disks or different identification information of an LUN in a G-LUN with respect to a single LUN number. In a case where the LUN number represents a logical unit number group (G-LUN), the LUN constituent information column 503 indicates identification information of a corresponding logical disk having an LUN included in the logical unit number group (G-LUN).

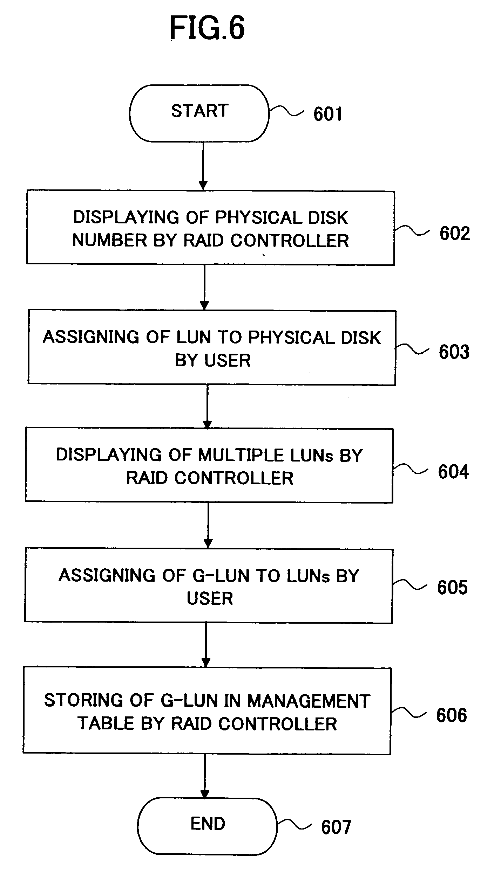

Next, the process of forming and maintaining the management table (aforementioned (2)) is described. Fig.6 is a flowchart showing the process of generating and maintaining the management table. The process begins from Step 601.

Next, in Step 602, the RAID controller 370 shown in Fig.3 sends constituent information of each of the physical disk apparatuses 300, 301, 311, 320, 330, 331, 332, and 340 to the server 350 via the network 360 and displays physical disk apparatuses corresponding to the constituent information on a monitor of the server 350.

Next, in Step 603, the user of the server 350 assigns a LUN to each physical disk apparatus displayed on the monitor of the server 350.

Next, in Step 604, the RAID controller 370 displays the LUNs of the physical disk apparatuses by the user on the monitor of the server 350.

Next, in Step 605, the user of the server 350 assigns a G-LUN(s) to the LUNs displayed on the monitor.

Then, finally, in Step 606, the RAID controller 370 stores the LUNs assigned to the physical disk apparatuses, the G-LUN(s) assigned to the LUNs, and identification information of the physical disk apparatus assigned to each LUN or identification information of an LUN included in a G-LUN in the form of the management table described with Figs.4 and 5.

Accordingly, each LUN can be assigned with a corresponding G-LUN and maintained in the form of the management table.

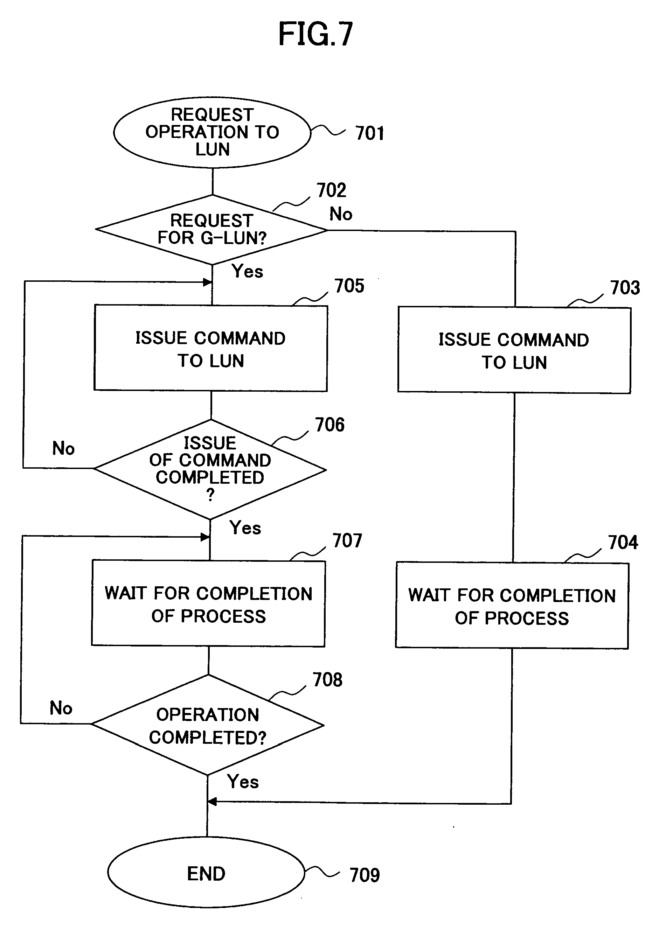

Next, the process of making a request, which is made to the G-LUN, with respect to each of the LUNs (aforementioned (3)) and the process of detecting completion of a process requested of each LUN and completing the requesting process by the G-LUN are described with reference to Fig.7.

Fig.7 is a flowchart showing the process of making a request, which is made to the G-LUN, with respect to each of the LUNs and the process of detecting completion of a process requested of each LUN and completing the requesting process to the G-LUN. In this embodiment, the processes may be performed regardless of the process that is requested by the server.

In Step 701, the server 350 shown in Fig.3 requests a LUN(s) to perform a predetermined operation.

Next, in Step 702, the RAID controller 370 shown in Fig.3 determines whether the request requesting the LUN(s) to perform the predetermined operation is directed to a G-LUN. The determination of whether the request is directed to a G-LUN is performed by referring to the G-LUN indication information corresponding to the requested LUN indicated in the management table shown in Fig.4 or Fig.5. In a case where the request from the server is not directed to a G-LUN, the process proceeds to Step 703.

Next, in Step 703, the RAID controller 370 issues a request requesting the predetermined operation to be performed to a single LUN. Then, the process proceeds to Step 704.

Next, in Step 704, the RAID controller 370 waits for the completion of the predetermined operation requested of the LUN in Step 703. Then, when the predetermined operation is completed, the process proceeds to Step 709 in which the process of requesting the predetermined operation is completed.

Meanwhile, in Step 702, the process proceeds to Step 705 when the server's request requesting the LUN(s) to perform the predetermined operation is directed to a G-LUN.

In Step 705, the RAID controller 370 of Fig.3 issues a command to a constituent LUN included in the G-LUN to perform the predetermined operation. Then, the process proceeds to Step 706.

In Step 706, it is determined whether the commands for the predetermined operation are issued to all of constituent LUNs included in the G-LUN. The determination of whether the command is issued to all of the constituent LUNs is performed by referring to the G-LUN indication information corresponding to the requested LUN indicated in the management table shown in Fig.4 or Fig.5. For example, in a case where the predetermined operation is requested to all logical disks having an LUN number of 10, it is determined that the issuing of the command of the predetermined operation to all LUNs is completed when the LUN number changes from 10 to 11 according to a top to bottom order in the management table shown in Fig.4. In another exemplary case, it is determined that the issuing of the commands of the predetermined operation to all LUNs is completed when the command of the predetermined operation is issued to all LUNs indicated in the LUN constituent information 503 corresponding to the LUN number 10 according to the management table shown in Fig.5. Furthermore, in a case where the command of the predetermined operation to the LUNs is not issued to all constituent LUNs included in the G-LUN, the process proceeds to Step 705 in which the command of the predetermined operation is issued to a subsequent constituent LUN included in the G-LUN. Then, the process proceeds to Step 706. The Steps 705 and 706 are performed with respect to all constituent LUNs included in the G-LUN.

Next, the process proceeds to Step 707. In Step 707, the RAID controller 370 shown in Fig.3 waits for the completion of the predetermined operation command issued to the constituent LUN(s) in Step 705. After one of the constituent LUNs completes the requested predetermined operation, the process proceeds to Step 708 in which the RAID controller 370 determines whether the predetermined operation is completed by all of the constituent LUNs. It is determined whether all of the constituent LUNs completed the requested predetermined operation by referring to the G-LUN indication information corresponding to the requested LUN indicated in the management table shown in Fig.4 or Fig.5. For example, it is determined that the requested predetermined operation is completed when receiving information indicative of the completion from all logical disks having an LUN number of 10 according to a top to bottom order in the management table shown in Fig.4. In another exemplary case, it is determined that the requested predetermined operation is completed when receiving information indicative of the completion from all LUNs indicated in the LUN constituent information 503 corresponding to the LUN number 10 according to the management table shown in Fig.5. In Step 708, the process proceeds to Step 707 in a case where the RAID controller 370 determines that the predetermined operation is not completed by all constituent LUNs. Then, the RAID controller 370 further waits for the completion of the predetermined operation commanded to the constituent LUN(s) in Step 705. After another one of the constituent LUNs completes the commanded predetermined operation, the process proceeds to Step 708 in which the RAID controller 370 determines whether the predetermined operation is completed by all of the constituent LUNs. Then, when the RAID controller determines that the predetermined operation is completed by all of the constituent LUNs, the process proceeds to Step 709 in which the process of requesting the predetermined operation to all constituent LUNs included in the G-LUN is completed.

Accordingly, a process requested to the G-LUN is executed by issuing a command to each constituent LUN included in the G-LUN and determining the completion of the process by each constituent LUN.

Hence, as described above, the server can perform an operation on plural LUNs with a single request. Accordingly, processes of saving a related LUN or executing a predetermined operation can be performed simultaneously from the aspect of hardware. Therefore, the synchronization among the processes of plural LUNs can be adequately controlled.

Furthermore, requests such as saving or copying of logically related LUNs can be synchronously performed among plural LUNs.

Further, the present invention is not limited to these embodiments, but variations and modifications may be made without departing from the scope of the present invention.

## Claims

1. A method of grouping logical units **characterized by** comprising the steps of:
selecting a plurality of logical units, each logical unit having a logical unit number; and
assigning a group logical unit number, which is distinguished from said logical unit number, to a group including the plural logical units that are selected in the selecting step.

2. The method of grouping logical units as claimed in claim 1, **characterized in that** the step of assigning the group logical unit number includes a step of forming a management table indicative of the logical unit number, information indicating whether the logical unit number represents the group logical unit number, and information identifying a physical apparatus included in the logical unit or information identifying the logical unit included in the group.

3. The method of grouping logical units as claimed in claim 2, further **characterized by** comprising a step of storing the management table.

4. The method of grouping logical units as claimed in claim 1, **characterized in that** the logical unit includes a logical disk.

5. The method of grouping logical units as claimed in claims 2 or 3, **characterized in that** the logical unit includes a logical disk, wherein the physical apparatus includes a physical disk apparatus.

6. A method of processing a received request **characterized by** comprising the steps of:
selecting a plurality of logical units, each logical unit having a logical unit number;
assigning a group logical unit number, which is distinguished from said logical unit number, to a group including the plural logical units that are selected in the selecting step, the step of assigning the group logical unit number including a step of forming a management table indicative of the logical unit number, information indicating whether the logical unit number represents the group logical unit number, and information identifying a physical apparatus included in the logical unit or information identifying the logical units included in the group;
issuing a command to execute a predetermined operation to all of the logical units included in the group indicated in the management table upon receiving a request for the execution of the predetermined operation, the request being requested by using the group logical unit number; and
determining whether the execution of the predetermined operation is completed by all of the logical units.

7. The method of processing a received request as claimed in claim 6, **characterized in that** the logical unit includes a logical disk, wherein the physical apparatus includes a physical disk.

8. An apparatus for grouping logical units, the apparatus **characterized by** comprising:
a selecting part for selecting a plurality of logical units, each logical unit having a logical unit number; and
an assigning part for assigning a group logical unit number, which is distinguished from said logical unit number, to a group including the plural logical units that are selected by the selecting part.

9. The apparatus for grouping logical units as claimed in claim 8, **characterized in that** the assigning part for assigning the group logical unit number includes a part for forming a management table indicative of the logical unit number, information indicating whether the logical unit number represents the group logical unit number, and information identifying a physical apparatus included in the logical unit or information identifying the logical unit included in the group.

10. The apparatus for grouping logical units as claimed in claim 9, further **characterized by** comprising a storing part for storing the management table.

11. The apparatus for grouping logical units as claimed in claim 8, **characterized in that** the logical unit includes a logical disk.

12. The apparatus for grouping logical units as claimed in claims 9 or 10, **characterized in that** the logical unit includes a logical disk, wherein the physical apparatus includes a physical disk apparatus.

13. An apparatus for processing a received request, the apparatus **characterized by** comprising:
a selecting part for selecting a plurality of logical units, each logical unit having a logical unit number;
an assigning part for assigning a group logical unit number, which is distinguished from said logical unit number, to a group including the plural logical units that are selected by the selecting part, the assigning part for assigning the group logical unit number including a part for forming a management table indicative of the logical unit number, information indicating whether the logical unit number represents the group logical unit number, and information identifying a physical apparatus included in the logical unit or information identifying the logical units included in the group;
an issuing part for issuing a command to execute a predetermined operation to all of the logical units included in the group indicated in the management table upon receiving a request for the execution of the predetermined operation, the request being requested by using the group logical unit number; and
a determining part for determining whether the execution of the predetermined operation is completed by all of the logical units.

14. The apparatus for processing a received request as claimed in claim 13, **characterized in that** the logical unit includes a logical disk, wherein the physical apparatus includes a physical disk.
